(19) Europäisches Patentamt
European Patent Office
Office européen des brevets

(11) EP 4 053 724 A1

(12) EUROPEAN PATENT APPLICATION

(43) Date of publication:
07.09.2022  Bulletin 2022/36

(51) International Patent Classification (IPC):
G06F 21/62 $^{(2013.01)}$    G06F 17/16 $^{(2006.01)}$

(21) Application number: 21160035.8

(52) Cooperative Patent Classification (CPC):
G06F 21/6245

(22) Date of filing: 01.03.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Technische Universität Berlin
10623 Berlin (DE)

(72) Inventors:
• GÜNLÜ, Dr.-Ing. Onur
  10557 Berlin (DE)
• SCHAEFER, Prof. Dr.-Ing. Rafael F.
  12209 Berlin (DE)

(74) Representative: Bittner, Thomas L.
Boehmert & Boehmert
Anwaltspartnerschaft mbB
Pettenkoferstrasse 22
80336 München (DE)

(54) **METHOD AND SYSTEM FOR INCREASING PRIVACY OF USER DATA WITHIN A DATASET AND COMPUTER PROGRAM PRODUCT**

(57)     A method for increasing privacy of user data of a plurality of users within a dataset is disclosed. The method comprises, in one or more data processing devices, providing (10) a dataset comprising a plurality of data points of a plurality of users and comprising inter-user correlations within the plurality of data points; determining (12) a plurality of transform coefficients by applying a transform on the plurality of data points; determining (14) a plurality of private transform coefficients from the plurality of transform coefficients by applying an $(\varepsilon, \delta)$-differential privacy mechanism to each non-zero transform coefficient of the plurality of transform coefficients; and determining (15) a private dataset comprising a plurality of private data points from the plurality of private transform coefficients by applying, on the plurality of private transform coefficients, an inverse transform of the transform; wherein the $(\varepsilon, \delta)$-differential privacy mechanism is adapted such that the plurality of private data points is $(\varepsilon, \delta)$-differential private. Further, a system for increasing privacy of user data of a plurality of users within a dataset and a computer program product are provided.

Fig. 1

## Description

The present disclosure refers to a method and a system for increasing privacy of user data of a plurality of users within a dataset. Further, a computer program product is disclosed.

### Background

Various entities such as companies, hospitals, security enforcement units, or websites collect sensitive data from individuals such as customers, patients, employees, criminals or users. Such data regularly includes private data such as name, age, diseases, address, and personal accounts. However, to be able to perform statistical analyses on the collected data for future prediction and for future developments, researchers need certain fundamental information embedded in the data. For instance, determining whether a certain disease affects females more than males - or elderly more than younger people - may help to better protect the more vulnerable group. Similarly, companies can employ the data collected by various websites in order to make predictions about buying tendencies of potential customers. Furthermore, any distributed machine learning (ML) method such as federated learning (FL) exchanges private (ML model parameter) information, which may be used in membership inference attacks.

The main problem with such data to be shared publicly is that the data generally also leak information about individuals (e.g., a home address is in general sufficient to uniquely define an individual). For instance, in a setting of a dataset comprising the respective body weight of $K$ individuals, when an adversary queries the mean function for $K$ individuals, the average weight of the $K$ individuals is provided. After the first query, an additional query for $K$-1 individuals will automatically leak the weight of the left-out person. Especially due to data protection regulations such as European Union's General Data Protection Regulation (GDPR), any device that is integrated with, e.g., eye trackers or sensors that collect personal data will be forced to limit information leakage about individuals.

Therefore, differential privacy (DP) mechanisms have been proposed to preserve the fundamental information embedded in the data, while still ensuring that the identities of the contributing individuals remain inaccessible. DP mechanisms mainly distort or randomize the collected data in a controllable manner so that the fundamental information is retained, but the concrete information associated with an individual is hidden. Using DP, independent noise is generally added to the outcome of a function so that the outcome does not significantly change based on whether or not a random individual participated in the dataset.

DP uses a metric for estimating the privacy risk of an individual participating in a database. The main problem with the definition of the DP metric and currently available DP mechanisms is that the data points (i.e., samples of each individual) that constitute inputs of the DP mechanisms are assumed to be mutually independent. This assumption simplifies calculations, however, a potential attacker who knows the correlations or dependencies between different samples (different individuals' data points), called the inter-user correlations, may apply various filtering or inference methods to obtain more information about the identity of the individuals than what the DP metric promises. For instance, a person and his/her partner are likely to share the same home address, two siblings may have common diseases due to genetic factors, or people with similar educational/national/cultural backgrounds will likely have more overlapping interests. An attacker who knows that there are partners or siblings taking part in the same dataset can use such extra information to infer more information about these individuals than DP mechanisms estimate since these mechanisms assume that there is no dependency between the individuals' data or that the dependencies are unknown to the attacker. Furthermore, the dependency can be in any probabilistic form (not necessarily in deterministically representable forms), which makes the DP mechanisms even more vulnerable to filtering attacks.

To this end, a new notion called dependent differential privacy (DDP) with a new metric was proposed (Liu et al., NDDS Symp. 16, 2016) and formalized (Zhao et al., IEEE Globecom Workshops, 2017), which replaces the originally proposed DP metric by a metric that additionally involves the inter-user correlations. It was shown that a mechanism that is known to be $\varepsilon'$-DP is also $\varepsilon$-DDP with $\varepsilon' + \varepsilon_C = \varepsilon$, where $\varepsilon_C$ is larger for higher correlations. Furthermore, since the DDP metric recovers the DP metric, being $\varepsilon$-DDP implies being $\varepsilon$-DP. Since a larger $\varepsilon$ implies less privacy, it was proven by Zhao et al. that inter-user correlations reduce "actual" privacy if an attacker can apply inference or filtering attacks. Since however the DDP mechanisms have to perfectly match the correlation in the dataset, the complexity of such DDP mechanisms can be very large.

In the DP literature, a transform coding idea has been developed (Rastogi and Nath, ACM SIGMOD Int. Conf. on Management of Data, 2010), where data points that belong to the same user are correlated. For instance, when using a virtual reality (VR) device and watching a video for 10 minutes while the VR device captures a photo of the user's iris every 30 seconds, every photo taken will be highly correlated with (i.e., very similar to) the previous and later photos since video frames (that affect where a user looks at) are also dependent on previous and later frames. It was shown that if an orthogonal transform is applied to each user's data "separately" and if a DP mechanism distorts the samples in the transformed domain, then an attacker who has access to the correlations between different samples cannot learn much information by using filtering methods.

Summary

It is an object of the present disclosure to provide an improved method for increasing privacy of user data of a plurality of users which are stored within a dataset while preserving or increasing underlying fundamental information embedded in the dataset.

For solving the problem, a method for increasing privacy of user data of a plurality of users within a dataset according to independent claim 1 is provided. Further, a system for increasing privacy of user data according to independent claim 14 is provided. Moreover, a computer program product according to claim 15 is provided.

Further embodiments are disclosed in dependent claims.

According to one aspect, a method for increasing privacy of user data of a plurality of users within a dataset is provided. The method comprises, in one or more data processing devices, the following steps: providing a dataset comprising a plurality of data points of a plurality of users and comprising inter-user correlations within the plurality of data points; determining a plurality of transform coefficients by applying a transform on the plurality of data points; determining a plurality of private transform coefficients from the plurality of transform coefficients by applying an ($\varepsilon$, $\delta$)-differential privacy mechanism to each non-zero transform coefficient of the plurality of transform coefficients; and determining a private dataset comprising a plurality of private data points from the plurality of private transform coefficients by applying, on the plurality of private transform coefficients, an inverse transform of the transform, wherein the ($\varepsilon$, $\delta$)-differential privacy mechanism is adapted such that the plurality of private data points is ($\varepsilon$, $\delta$)-differential private.

According to another aspect, a system for increasing privacy of user data of a plurality of users within a dataset is provided. The system comprises one or more data processing devices which are configured to provide a dataset comprising a plurality of data points of a plurality of users and comprising inter-user correlations within the plurality of data points; determine a plurality of transform coefficients by applying a transform on the plurality of data points; determine a plurality of private transform coefficients from the plurality of transform coefficients by applying an ($\varepsilon$, $\delta$)-differential privacy mechanism to each non-zero transform coefficient of the plurality of transform coefficients; and determine a private dataset comprising a plurality of private data points from the plurality of private transform coefficients by applying, on the plurality of private transform coefficients, an inverse transform of the transform, wherein the ($\varepsilon$, $\delta$)-differential privacy mechanism is adapted such that the plurality of private data points is ($\varepsilon$, $\delta$)-differential private.

Further, a computer program product, comprising program code configured to perform a method for increasing privacy of user data of a plurality of users within a dataset is provided.

With the proposed method, protection of user data from inference attacks may be increased. In particular, the dataset is decorrelated by applying a transform on the dataset before applying a differential privacy mechanism. On the other hand, the user data may be less distorted in order to ensure privacy such that the quality of underlying fundamental information in the dataset may be increased. The method may be particularly useful for information privacy products, e.g., in the context of Internet of Things or RFID device privacy.

Within the context of the present disclosure, a randomized mechanism is an ($\varepsilon$, $\delta$)-differential privacy mechanism (($\varepsilon$, $\delta$)-DP) if for all databases $D$ and $D'$ that differ at most in one element (i.e., the data point of one user), for every $S \subseteq$ Range($M$), the following inequality holds:

$$\Pr[M(D) \in S] \leq e^\varepsilon \Pr[M(D') \in S] + \delta,$$

wherein $\varepsilon$, $\delta \geq 0$ are real-valued numbers. A probability is denoted by Pr. In case of $\delta = 0$, the ($\varepsilon$, $\delta = 0$)-differential privacy mechanism is also called $\varepsilon$-differential private. In order to provide ($\varepsilon$, $\delta$)-DP for a dataset, a corresponding ($\varepsilon$, $\delta$)-DP mechanism can be applied within the proposed method. Applying the ($\varepsilon$, $\delta$)-DP mechanism may correspond to adding noise distributed according to at least one distribution parameter, which may comprise a query sensitivity of the dataset, a dataset size, and a number of non-zero transform coefficients. Within the method, in principle any parameter set of a DP mechanism, including mechanisms that are not based on adding independent noise, can be adapted to provide ($\varepsilon$, $\delta$)-DP.

The privacy mechanism that is applied in the proposed method inparticular allows for decorrelating the samples of multiple users, each of which has one sample. In contrast, in Günlü-Bozkir et al., Differential Privacy for Eye Tracking with Temporal Correlations, arXiv, 2020, employed datasets, to which a discrete Fourier transform was applied, comprised only correlated data samples of a single user. The privacy mechanisms used in Günlü-Bozkir et al. and the proposed method in particular result in different privacy guarantees. Unlike the DFT in Günlü-Bozkir et al. that is applied by each individual/user/party/node independently and locally, within the proposed method, DP mechanisms can be applied by a data curator who has access to data of multiple users after decorrelating the inter-user decorrelations. Local and global applications of a transform are to be distinguished since a local model is not a subset of a global model. Namely, if a user secures his/her data via local transforms and privacy mechanisms, then a server should not observe the raw data, and if a server secures all users' data via one general transform, then a user should not be securing his/her data himself/herself locally. Therefore, as opposed to existing approaches where the data protection is provided by local operations, in that the users handle/own/observe/secure their own data themselves, the proposed method particularly allows for using a global model, where an aggregator or a server handle/own/observe/secure all users' data in a centralized manner.

The transform may be selected from a set of transforms such that, when applying the transform on the plurality of data points, a decorrelation efficiency metric value of the plurality of transform coefficients is maximized.

The decorrelation efficiency metric value may be a function of an autocovariance matrix of the plurality of transform coefficients and an autocovariance matrix of the plurality of data points.

In particular, the decorrelation efficiency metric value may be determined by the following formula:

$$\eta_c = 1 - \frac{\sum_{k=0}^{n-1} \sum_{l=0}^{n-1} |C_{TT}(k,l)| \; \mathbb{1}\{k \neq l\}}{\sum_{k=0}^{n-1} \sum_{l=0}^{n-1} |C_{XX}(k,l)| \; \mathbb{1}\{k \neq l\}}.$$

The autocovariance matrix of the plurality of transform coefficients is denoted by $C_{TT}$, a further autocovariance matrix of the plurality of data points is denoted by $C_{XX}$, and an indicator function taking the value 1 if $k \neq l$ and 0 otherwise is denoted by $\mathbb{1}\{k \neq l\}$.

It may be provided that the decorrelation efficiency metric value is determined from the dataset and the resulting transform coefficients for each transform of the set of transforms.

The set of transforms may comprise a set of orthogonal transforms, for example a discrete cosine transform (DCT), a discrete Fourier Transform (DFT), a discrete Walsh-Hadamard transform (DWHT), and a discrete Haar transform (DHT). The set of transforms may also comprise a Karhunen-Loève transform (KLT).

The set of transforms may also comprise decorrelation matrices that are generated as follows: Providing an initial matrix, which is orthogonal, and determining the decorrelation matrix from the initial matrix by at least once selecting and applying at least one of a plurality of matrix extension mappings on the initial matrix. Each of the plurality of matrix extension mappings generates, from an input orthogonal matrix, a further orthogonal matrix with higher matrix dimension than the input orthogonal matrix.

The plurality of matrix extension mappings may comprise at least one of: $A \rightarrow [A, A; A, -A]$, $A \rightarrow [A, A; -A, A]$, $A \rightarrow [A, -A; A, A]$, $A \rightarrow [-A, A; A, A]$, $A \rightarrow -[A, A; A, -A]$, $A \rightarrow -[A, A; -A, A]$, $A \rightarrow -[A, -A; A, A]$, and $A \rightarrow - [-A, A; A, A]$, wherein the input orthogonal matrix is denoted by $A$. Each right hand side corresponds a block matrix comprising the input orthogonal matrix $A$ assigned with varying signs as matrix blocks. Thus, each of the decorrelation matrices may be a $2^n \times 2^n$ matrix with $n$ being a positive integer. The initial matrix may be composed of matrix entries being 1 or -1. Alternatively, the initial matrix may also comprise further real-valued matrix entries. The initial matrix may be one of [1,1; 1, -1], [1, 1; -1,1], [1, - 1; 1,1], [-1, 1; 1, 1], -[1, 1; 1,-1], -[1,1; -1, 1], -[1, -1; 1,1], and -[-1, 1; 1,1].

The set of transforms may further comprise nonlinear invertible transforms.

Instead of selecting the transform, the transform may also have been fixed at the onset of the method.

The decorrelation efficiency metric value of the plurality of transform coefficients may be determined by determining an autocovariance matrix of the plurality of transform coefficients.

The method may comprise discarding each transform of the set of transforms having a computational complexity value above a complexity threshold.

The discarding may be preferably carried out before selecting the transform.

The method may also comprise discarding each transform of the set of transforms which has a hardware implementation complexity value above the complexity threshold. Further, the method may comprise discarding each transform of the set of transforms whose inverse transform has a hardware implementation complexity value and/or computational complexity value above the complexity threshold.

The complexity value may for example be determined by the total hardware area (including, e.g., the required amount of random access memory (RAM) and read-only memory (ROM) in a Field Programmable Gate Array (FPGA) in order to implement the transform and its inverse.

The method may comprise discarding each transform of the set of transforms yielding a utility metric value of the plurality of transform coefficients below a utility threshold.

The further discarding may be preferably carried out before selecting the transform.

The utility metric value of the plurality of transform coefficients for one transform of the set of transforms is determined by applying the transform on the plurality of data points and computing the utility metric value of the resulting plurality of transform coefficients.

The utility metric value may be determined from a normalized mean square error of the dataset and the private dataset, preferably from an inverse value of the normalized mean square error of the dataset and the private dataset. In particular, the utility metric may be determined by the formula

$$\left(\frac{1}{n}\sum\nolimits_{k=1}^{n}\frac{\left(X_k - \tilde{X}_k\right)^2}{\bar{X}\bar{\tilde{X}}}\right)^{-1}$$

with $\bar{X} = \frac{1}{n}\sum_{k=1}^{n}X_k$ and $\bar{\tilde{X}} = \sum_{k=1}^{n}\tilde{X}_k.$ The value $\tilde{X}_k$ corresponds to the data point $X_k$ plus additional independent noise, similar to employing a DP mechanism.

The transform may be a data-dependent transform. Notably, the transform may depend on the plurality of data points. In particular, the transform may be the Karhunen-Loève transform / KLT.

Alternatively, the transform may be independent from a concrete realization of the plurality of data points.

The transform may be an orthogonal transform. In particular, the transform may be one of DCT, DFT, DHT, DWHT, and one of the decorrelation matrices as described above.

Alternatively, the transform may be a nonlinear invertible transform.

For at least one of the transform coefficients, a variance value may be determined from a probabilistic model assigned to the at least one of the transform coefficients.

A corresponding probabilistic model may be assigned to each one of the plurality of transform coefficients. Each of the corresponding probabilistic models may be determined by applying the transform to each of a plurality of test datasets and fitting the respective probabilistic model to each of resulting multiple samples of test transform coefficients.

From each probabilistic model corresponding to one of the transform coefficients, a variance value of the one of the transform coefficients can be determined.

The probabilistic model may for example comprise any of Laplace, Cauchy, Gaussian or generalized Gaussian distributions.

The method may further comprise setting at least one of the transform coefficients to zero such that a total sum of variance values of each of the plurality of transform coefficients is larger than a variance threshold.

The variance threshold may be a ratio of a first total sum of variance (power) values of the plurality of transform coefficients before setting any of the plurality of transform coefficients to zero.

The variance threshold may correspond to preserving a value between 90 % and 99,9 %, in particular 95 % of the total sum of variance values (total power).

In the method, the following step may be repeated as long as the total sum of variance values of the plurality of transform coefficients is larger than the variance threshold: determining a low-variance transform coefficient of the plurality of transform coefficients which comprises a lowest nonzero variance value; and/or setting the low-variance transform coefficient to zero.

Alternatively, the plurality of transform coefficients may be ordered according to their assigned variance value and the transform coefficients are successively set to zero until the variance threshold is reached. To this end, a permutation operation may be applied to the transform coefficients.

Determining the plurality of private transform coefficients may comprise adding independent noise to each non-zero transform coefficient of the plurality of transform coefficients.

In particular, independent and identically distributed (i.i.d.) noise may be added.

The noise may be distributed with a distribution parameter dependent on at least one of the number of users, the number of non-zero transform coefficients, a query sensitivity, and an ($\varepsilon$, $\delta$) pair, preferably dependent on the number of users, the number of non-zero transform coefficients, the query sensitivity, and the ($\varepsilon$, $\delta$) pair.

Alternatively, the plurality of private transform coefficients may be determined by randomly changing the transform coefficients in a non-additive manner by applying a non-additive DP mechanism.

In case the plurality of transform coefficients were ordered according to their assigned variance value, the inverse operation of the employed permutation operation may be applied to the plurality of private transform coefficients. In case the transform coefficients were iteratively thresholded, the plurality of private transform coefficients may also be reordered correspondingly.

The noise may be Laplace distributed.

In particular, the noise may be distributed according to a continuous Laplace distribution with distribution parameter $= \sqrt{n}\cdot\sqrt{j}\cdot\Delta_{\mathrm{W}}(X^n)/\,\varepsilon.$

The noise may also be distributed according to a discretized Laplace distribution. Further, the noise may be distributed according to a continuous or a discretized Gaussian distribution. Moreover, the noise may be distributed according to a continuous or a discretized truncated Gaussian distribution.

The $(\varepsilon,\delta)$-differential privacy mechanism may be adapted by adapting a noise distribution parameter associated with the $(\varepsilon,\delta)$-differential privacy mechanism.

The value of $\varepsilon$ may be any real value between 0 and 1, i.e., it may take values from the set (0, 1). Especially, the values 0.01, 0.02, ... , 0.1, 0.11, ... , 0.99 may be chosen. The value of $\delta$ may be any real value between 0 and 0.1, i.e., it may take values from the set (0, 0.1). Especially, the values 0.001, 0.002, ... , 0.01, 0.011, ... , 0.099 may be chosen.

The dataset may comprise one data point per user of the plurality of users and correlations in the dataset may consist of the inter-user correlations within the plurality of users.

The aforementioned embodiments related to the method for increasing privacy of user data of a plurality of users within a dataset can be provided correspondingly for the system for increasing privacy of user data.

Description of further embodiments

In the following, embodiments, by way of example, are described with reference to figures.

Fig. 1    shows a graphical representation of a method for increasing privacy of user data.
Fig. 2    shows a graphical representation of another embodiment of the method for increasing privacy of user data.

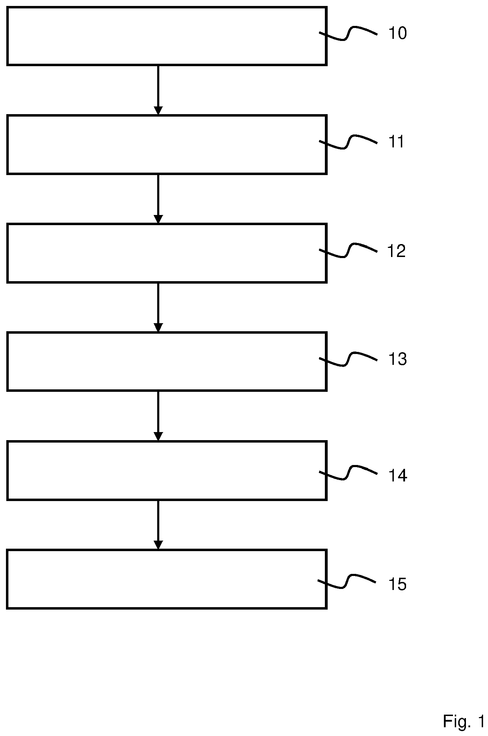

Fig. 1 shows a graphical representation of a method for increasing privacy of user data. In a first step 10, a dataset is provided which comprises a plurality of data points of a plurality of users and inter-user correlations within the plurality of data points.

In a second step 11, a transform, preferably an orthogonal transform, to be applied to the plurality of data points is selected from a set of transforms.

In a third step 12, a plurality of transform coefficients is determined by applying the transform on the plurality of data points.

In a fourth step 13, the transform coefficients are thresholded by discarding the transform coefficients with lowest variance. Namely, at least one of the transform coefficients is set to zero while ensuring that a total sum of variance values of each of the plurality of transform coefficients is larger than a variance threshold. In order to carry out the thresholding, the transform coefficients may be reordered (permuted) according to their respective variance/power value.

In a fifth step 14, a plurality of private transform coefficients is determined from the plurality of transform coefficients by applying an $(\varepsilon, \delta)$-differential privacy mechanism to each non-zero transform coefficient of the plurality of transform coefficients.

In a sixth step 15, the private transform coefficients are permuted back to the index ordering of the raw dataset by applying the inverse of the (power) ordering operation applied in the fourth step 13. Subsequently, a private dataset comprising a plurality of private data points is determined from the plurality of private transform coefficients by applying an inverse transform of the transform on the plurality of private transform coefficients.

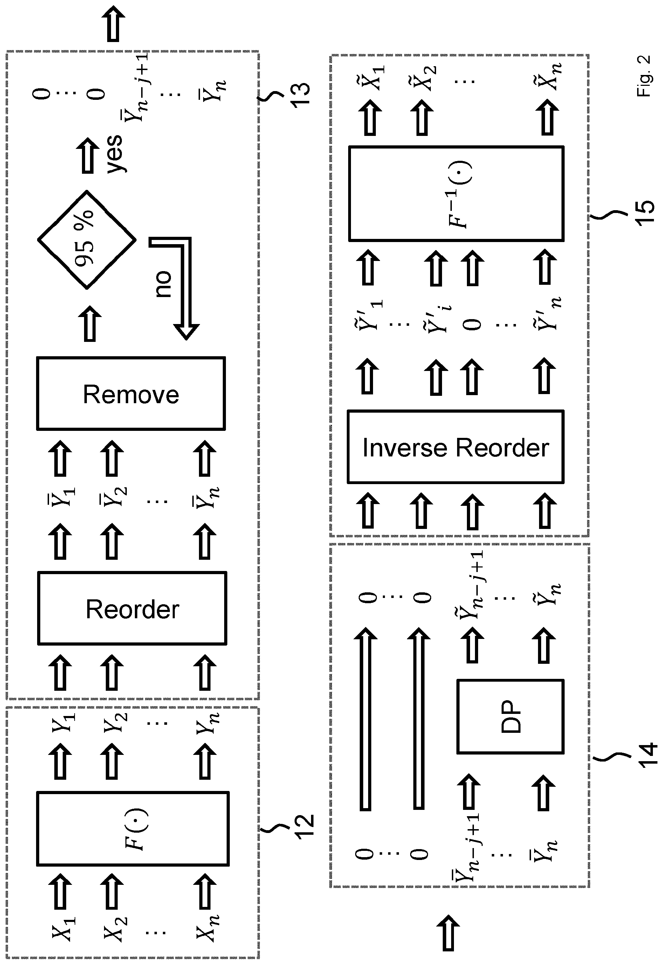

Fig. 2 shows a graphical representation of another embodiment of the method for increasing privacy of user data.

Corresponding to the first step 10 of the method, the dataset $X^n = \{X_1, X_2, ..., X_n\}$ which contains the data of $n$ users is provided. The number $n$ is an integer value, which can in principle be arbitrarily large as long as permitted by the provided data processing device. The dataset $X^n$ may comprise any type of correlations (probabilistic dependencies) between the users. These inter-correlations may be known to the dataset owner (e.g., a server or an aggregator) and may also be known to a potential attacker. Such a case has not been treated in detail in differential privacy and information privacy literature since the correlations between the users are assumed to be unknown by an attacker. This assumption is not necessarily justified, especially in case the attacker has access to another dataset of the same data type with similar correlations.

The dataset $X^n$ may specifically contain one data point $X_k$ (also called data sample) per user $k$. Thus, the correlations between different data points in the dataset $X^n$ consist of the inter-user correlations between the $n$ users.

It is important to reduce existing inter-user correlations, which can be carried out by transforming the $n$ data points $\{X_1, X_2, ..., X_n\}$ into another domain, namely by applying a transform $F$ on the dataset $X^n$ and obtaining transform coefficients $Y^n = \{Y_1, Y_2, ..., Y_n\} = \{F\{X_1, X_2, ..., X_n\}\}$ as outputs.

Thereto (second step 11), consider a transform $F$ to decorrelate the dataset $X^n$. There exists an optimal transform in the sense that it may completely decorrelate the dataset $X^n$, which is the Karhunen-Loève transform / KLT. The KLT depends on the dataset at hand, i.e., the KLT is a data-dependent transform. Hence, in this case a specific transform is applied for each dataset $X^n$ with different statistical properties. Still, the method itself to determine the KLT is the same.

Transforming the dataset $X^n$ via KLT may require substantial computational resources. In case the server or aggregator does not have enough computational power or if there is a delay constraint for the computations, alternative transforms may have to be selected. A close approximation of the KLT is the discrete cosine transform / DCT, which does not depend on the dataset $X^n$. When employing DCT as transform, the computation time is decreased, allowing for more design flexibility with regard to the method. Further possible transforms comprise discrete Fourier Transform / DFT, discrete Walsh-Hadamard transform / DWHT, discrete Haar transform / DHT, and the decorrelation matrices as described above. In principle, most orthogonal transforms may provide suitable candidates for satisfactory decorrelation efficiency results.

The correlations between the output coefficients $\{Y_1, Y_2, ..., Y_n\}$ are smaller than the correlations between the data points $\{X_1, X_2, ..., X_n\}$. How well a transform decorrelates a given dataset $X^n$ is quantified by a decorrelation efficiency metric $\eta_c$ given by the by the following formula:

$$\eta_c = 1 - \frac{\sum_{k=0}^{n-1} \sum_{l=0}^{n-1} |C_{TT}(k,l)| \; \mathbb{1}\{k \neq l\}}{\sum_{k=0}^{n-1} \sum_{l=0}^{n-1} |C_{XX}(k,l)| \; \mathbb{1}\{k \neq l\}},$$

wherein the autocovariance matrix of the plurality of transform coefficients is denoted by $C_{TT}$, a further autocovariance matrix of the plurality of data points is denoted by $C_{XX}$, and an indicator function taking the value 1 if $k \neq l$ and 0 otherwise is denoted by $\mathbb{1}\{k \neq l\}$.

Higher decorrelation efficiency and low computational complexity are preferred in choosing the orthogonal transform to be used by the dataset owner.

A specific selection procedure may be carried out to provide an optimal trade-off between computational effort, utility, and decorrelation efficiency.

All available orthogonal transforms in the literature can be considered. In principle, invertible nonlinear transforms can also be considered. With such a nonlinear transform, nonlinear inter-user correlations could also be eliminated. On the other hand, hardware complexity might be further increased.

A complexity threshold with respect to the computational and hardware implementation complexities of the transform (and also its inverse transform) is determined so that the method can be carried out efficiently. Further, a utility threshold is determined.

Subsequently, all considered orthogonal transforms that have a complexity below the complexity threshold are applied to the dataset $X^n$. Those orthogonal transforms that result in a lower utility metric value than required by the utility threshold are also discarded. The utility metric U may be determined by

$$U = \frac{1}{\text{NMSE}},$$

wherein a normalized mean square error NMSE is defined as

$$\text{NMSE} = \frac{1}{n} \sum_{k=1}^{n} \frac{\left(X_k - \tilde{X}_k\right)^2}{\bar{X} \bar{\tilde{X}}}$$

with $\bar{X} = \frac{1}{n}\sum_{k=1}^{n} X_k$ and $\bar{\tilde{X}} = \sum_{k=1}^{n} \tilde{X}_k$. The value $\tilde{X}_k$ corresponds to the data point $X_k$ plus additional noise, such as when employing a differential privacy mechanism as laid out with regard to the subsequent steps of the method. In order to determine utility values from the normalized mean square error, DP mechanisms may also be applied to the transform coefficients resulting from the transformed dataset $X^n$. In general, adding independent noise to data distorts the data and decreases its utility. The utility as defined above increases if the distortion on the data caused by the noise added to protect privacy and quantified by the normalized mean square error is smaller.

Subsequently, the decorrelation efficiency metric $\eta_c$ is determined for all remaining transforms applied to the dataset $X^n$. The transform that provides the highest decorrelation efficiency metric value and is below the complexity threshold is selected as the transform F to be employed for the further steps of the method.

Employing the selected transform $F$, the transform coefficents $Y^n = \{Y_1, Y_2, ..., Y_n\} = \{F(X_1, X_2, ..., X_n)\}$ are determined (third step 12).

In the fourth step 13, a thresholding procedure is carried out on the transform coefficients $Y^n$. This way, less relevant transform coefficients are eliminated, which increases the utility of the resulting private dataset $\tilde{X}^n$ for the same privacy parameter. For all noise-infusing privacy mechanisms, if privacy level increases, then the utility of the data decreases ("No Free Lunch Theorem"). In any case, the method can be applied to all differential privacy mechanisms, including the ones that do not infuse noise.

The relevance of one of the transform coefficients $Y_k$ is connected to its power. The power which may be derived from a probabilistic model fitted to a transform coefficient is equal to the variance of the fitted probabilistic model. If the probabilistic model is unknown, it can in principle be determined by considering multiple (test) datasets $X^n$. By applying the same transform $F$ to each of the multiple datasets $X^n$, multiple samples for each transform coefficient $Y_k$ are provided. These multiple samples may be employed to fit the probabilistic model to each transform coefficient $Y_k$ separately.

After determining the power/variance for each transform coefficient $Y_k$, the transform coefficients $Y^n$ are reordered according to their power values by applying a reordering operation $R(\cdot)$, for example, in ascending order (or descending order), yielding a plurality of reordered transform coefficients ($\overline{Y}_1, \overline{Y}_2, ..., \overline{Y}_n$). In case of an ascending order, the first non-zero transform coefficient corresponds to the transform coefficient with the minimum power. The first non-zero transform coefficient is removed / set to zero. Subsequently, it is checked whether the sum of variance values (total power) of the transform coefficients is above a variance threshold $T_v$. The variance threshold $T_v$ may be a ratio of the total power of the plurality of coefficients $Y^n$ before thresholding, for example a value between 90 % and 99,9 %, in particular 95 % of the total power. The choice of the variance threshold depends on the application at hand.

In case, e.g., 95 % of the total power is still preserved, the second transform coefficient is removed / set to zero. If not, the previously removed transform coefficient is restored (set to its original value) and the thresholding procedure is stopped. This step is sequentially repeated until $j$ transform coefficients $\overline{Y}_{n-j+1}, ..., \overline{Y}_n$ remain (where $j$ is less than or equal to $n$) such that at least 95 % of the total power is preserved. All removed (reordered) coefficients $\overline{Y}_1, ..., \overline{Y}_{n-j}$ are assigned the value zero while the remaining (reordered) transform coefficients $\overline{Y}_{n-j+1}, ..., \overline{Y}_n$ are not changed.

Alternatively, no thresholding takes place.

With regard to the fifth step 14, a suitable DP mechanism that adds independent noise to the remaining $j$ transform coefficients $\overline{Y}_{n-j+1}, ..., \overline{Y}_n$ is adjusted, for example to employ $j$ coefficients as input. This adjustment can be carried out uniquely because the parameters of the DP mechanism can be uniquely determined from the parameters of the (untransformed) dataset $X^n$. In principle, any differential privacy or information privacy method can be employed. No noise is added to the transform coefficients with value zero.

For example, in case of employing a DP mechanism which adds independent Laplace distributed noise to the transform parameters, the Laplace distribution parameter $\lambda$ should be set to

$$\lambda = \sqrt{n} \cdot \sqrt{j} \cdot \Delta_w(X^n) / \varepsilon$$

if $\varepsilon$-differential privacy is to be satisfied.

The minimum power/variance of the added noise required to satisfy $(\varepsilon, \delta)$-DP depends on the query sensitivity, which is a metric that quantifies the difference between the maximum and minimum data values. The query sensitivity $\Delta_w(X^n)$ of $X^n$ is the smallest number for all databases $D$ and $D'$ that differ at most in one element such that

$$\left\| X^n(D) - X^n(D') \right\|_w \leq \Delta_w(X^n),$$

where the $L_w$-distance is defined as

$$\left\| X^n \right\|_w = \sqrt{\sum_{k=1}^{n} |X_k|^w} .$$

In particular, w can be 1 or 2, respectively corresponding to $L_1$ or $L_2$ query sensitivity. Since different transforms $F$ will result in different sensitivities $\Delta_w$, the utilities $U$ for each transform $F$ will in general be different for each application and dataset. Therefore, considering the resulting utility $U$ of a transform $F$ as laid out above can increase the usability of the method.

By respectively adding noise values $N_{n-j+1}, ..., N_n$ to the transform coefficients $\overline{Y}_{n-j+1}, ..., \overline{Y}_n$, $j$ (permuted) private

transform coefficients $\tilde{Y}_{n-j+1}, ..., \tilde{Y}_n$ are determined. The $n - j$ transform coefficients set to zero are not changed by the DP mechanism.

With regard to the sixth step 15, the inverse operation $R^{-1}$ of the reordering operation R may be applied to the private transform coefficients $0, ...,0, \tilde{Y}_{n-j+1}, ..., \tilde{Y}_n$, yielding the (unpermuted) private transform coefficients $\tilde{Y}'_1, ..., \tilde{Y}'_n$. Subsequently, the inverse transform $F^{-1}$ of the employed transform $F$ is applied, yielding a private dataset $\tilde{X}^n = \{\tilde{X}_1, ...,\tilde{X}_n\}$. The private dataset $\tilde{X}^n$ is provided with guarantees against attackers who are informed about inter-user correlations, in particular, the private dataset $\tilde{X}^n$ is $(\varepsilon, \delta)$-differential private (if $\delta = 0$, it is also $\varepsilon$-differential private). This is, e.g., the case when employing the DP mechanism with Laplace distribution adjusted as indicated above.

Applying the inverse transform $F^{-1}$ ensures that the private data is in the same raw data domain as the dataset $X^n$ so that anyone (e.g., a researcher) who merely wants to obtain the fundamental information in the dataset $X^n$ does not have to apply an inverse transform and, thus, does not have to change his/her algorithm.

The features disclosed in this specification, the figures and / or the claims may be material for the realization of various embodiments, taken in isolation or in various combinations thereof.

**Claims**

1. A method for increasing privacy of user data of a plurality of users within a dataset, the method comprising, in one or more data processing devices:

   - providing (10) a dataset comprising a plurality of data points of a plurality of users and comprising inter-user correlations within the plurality of data points;
   - determining (12) a plurality of transform coefficients by applying a transform on the plurality of data points;
   - determining (14) a plurality of private transform coefficients from the plurality of transform coefficients by applying an $(\varepsilon, \delta)$-differential privacy mechanism to each non-zero transform coefficient of the plurality of transform coefficients; and
   - determining (15) a private dataset comprising a plurality of private data points from the plurality of private transform coefficients by applying, on the plurality of private transform coefficients, an inverse transform of the transform;

   wherein the $(\varepsilon, \delta)$-differential privacy mechanism is adapted such that the plurality of private data points is $(\varepsilon, \delta)$-differential private.

2. Method according to claim 1, wherein the transform is selected (11) from a set of transforms such that, when applying the transform on the plurality of data points, a decorrelation efficiency metric value of the plurality of transform coefficients is maximized.

3. Method according to claim 2, further comprising discarding each transform of the set of transforms having a computational complexity value above a complexity threshold.

4. Method according to claim 2 or 3, further comprising discarding each transform of the set of transforms yielding a utility metric value of the plurality of transform coefficients below a utility threshold.

5. Method according to one of the preceding claims, wherein the transform is a data-dependent transform.

6. Method according to one of the preceding claims, wherein the transform is an orthogonal transform.

7. Method according to one of the preceding claims, wherein for at least one of the transform coefficients, a variance value is determined from a probabilistic model assigned to the at least one of the transform coefficients.

8. Method according to one of the preceding claims, further comprising:

   - setting (13) at least one of the transform coefficients to zero such that a total sum of variance values of each of the plurality of transform coefficients is larger than a variance threshold.

9. Method according to one of the preceding claims, wherein the following step is repeated as long as the total sum of variance values of the plurality of transform coefficients is larger than the variance threshold:

- determining a low-variance transform coefficient of the plurality of transform coefficients which comprises a lowest nonzero variance value; and/or
- setting the low-variance transform coefficient to zero.

10. Method according to one of the preceding claims, wherein determining the plurality of private transform coefficients comprises adding independent noise to each non-zero transform coefficient of the plurality of transform coefficients.

11. Method according to claim 10, wherein the noise is Laplace distributed.

12. Method according to one of the preceding claims, wherein the $(\varepsilon, \delta)$-differential privacy mechanism is adapted by adapting a noise distribution parameter associated with the $(\varepsilon, \delta)$-differential privacy mechanism.

13. Method according to one of the preceding claims, wherein the dataset comprises one data point per user of the plurality of users and correlations in the dataset consist of the inter-user correlations within the plurality of users.

14. A system for increasing privacy of user data of a plurality of users within a dataset, the system comprising one or more data processing devices, the one or more data processing devices configured to

- provide (10) a dataset comprising a plurality of data points of a plurality of users and comprising inter-user correlations within the plurality of data points;
- determine (12) a plurality of transform coefficients by applying a transform on the plurality of data points;
- determine (14) a plurality of private transform coefficients from the plurality of transform coefficients by applying an $(\varepsilon, \delta)$-differential privacy mechanism to each non-zero transform coefficient of the plurality of transform coefficients; and
- determine (15) a private dataset comprising a plurality of private data points from the plurality of private transform coefficients by applying, on the plurality of private transform coefficients, an inverse transform of the transform,

wherein the $(\varepsilon, \delta)$-differential privacy mechanism is adapted such that the plurality of private data points is $(\varepsilon, \delta)$-differential private.

15. Computer program product, comprising program code configured to, when loaded into a computer having one or more processors, perform the method according to at least one of the claims 1 to 13.

Fig. 1

Fig. 2

Europäisches
Patentamt

European
Patent Office

Office européen
des brevets

# EUROPEAN SEARCH REPORT

**Application Number**

EP 21 16 0035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EFE BOZKIR ET AL: "Differential Privacy for Eye Tracking with Temporal Correlations", ARXIV.ORG, CORNELL UNIVERSITY LIBRARY, 201 OLIN LIBRARY CORNELL UNIVERSITY ITHACA, NY 14853, 20 February 2020 (2020-02-20), XP081604777, | 1-15 | INV. G06F21/62 G06F17/16 |
| Y | * sections 4.1, 5.1, 5.3 * ----- | 1-15 | |
| Y | WANG TAO ET AL: "Privacy Preservation in Big Data From the Communication Perspective-A Survey", IEEE COMMUNICATIONS SURVEYS & TUTORIALS, vol. 21, no. 1, 13 August 2018 (2018-08-13), pages 753-778, XP011711803, DOI: 10.1109/COMST.2018.2865107 [retrieved on 2019-02-21] * section IV, in particular definitions 7-9; table 5 * ----- | 1-15 | |
| X | Wang Hao ET AL: "Differentially Private Publication For Correlated Non-Numerical Data", , 1 January 2021 (2021-01-01), XP055820742, Retrieved from the Internet: URL:https://academic.oup.com/comjnl/advance-article-pdf/doi/10.1093/comjnl/bxab014/37140488/bxab014.pdf [retrieved on 2021-07-02] * sections 2.2, 3.1-3.3, 4 * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 9 July 2021 | Veillas, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIU et al.** *NDDS Symp.,* 2016, vol. 16
- **ZHAO et al.** *IEEE Globecom Workshops,* 2017
- **RASTOGI ; NATH.** *ACM SIGMOD Int. Conf. on Management of Data,* 2010
- **GÜNLÜ-BOZKIR et al.** *Differential Privacy for Eye Tracking with Temporal Correlations,* 2020